Europäisches Patentamt

European Patent Office

Office européen des brevets

(19)

(11) Numéro de publication: **0 333 555**
**A1**

## (12) DEMANDE DE BREVET EUROPEEN

(21) Numéro de dépôt: **89400627.9**

(22) Date de dépôt: **06.03.89**

(51) Int. Cl.⁴: **C 01 B 23/00**
**G 21 F 9/02**

(30) Priorité: **16.03.88 FR 8803406**

(43) Date de publication de la demande:
**20.09.89 Bulletin 89/38**

(84) Etats contractants désignés: **BE DE GB IT**

(71) Demandeur: **NOVATOME**
**Tour Fiat 1, place de la Coupole**
**F-92400 - Courbevoie (FR)**

(72) Inventeur: **Thevenin, Michel**
**11 allée du Mali**
**F-94260 Fresnes (FR)**

**Mercier, Jacques**
**99 rue de la part Dieu**
**F-69003 Lyon (FR)**

(74) Mandataire: **Bouget, Lucien et al**
**Cabinet Lavoix 2, Place d'Estienne d'Orves**
**F-75441 Paris Cédex 09 (FR)**

(54) **Procédé et dispositif d'épuration d'un gaz neutre tel que l'argon et leur utilisation dans un réacteur nucléaire.**

(57) On fait circuler le gaz neutre en contact avec du sodium forme divisée à haute température. On refroidit le gaz neutre après sa mise en contact avec le sodium, puis on le fait passer à travers d'au moins un ensemble de filtration (9, 10) avant son recyclage. On recueille le sodium renfermant des impuretés après sa mise en contact avec le gaz neutre et on le purifie par refroidissement et dépôt des impuretés solidifiées avant son recyclage. Le dispositif comporte en particulier des colonnes d'échange (7, 8), des filtres (9, 10) et un piège froid (21).

EP 0 333 555 A1

## Description

**Procédé et dispositif d'épuration d'un gaz neutre tel que l'argon et leur utilisation dans un réacteur nucléaire**

L'invention concerne un procédé et un dispositif d'épuration d'un gaz neutre tel que de l'argon.

Dans les réacteurs nucléaires à neutrons rapides refroidis par un métal liquide tel que le sodium, on utilise des quantités importantes de gaz neutre tel que l'argon, pour constituer des couvertures gazeuses recouvrant les niveaux libres du sodium liquide dans la cuve principale ou dans les autres parties du réacteur renfermant du sodium. L'argon utilisé doit être de très grande pureté et en particulier cet argon doit renfermer des quantités de gaz réactifs tels que l'oxygène et l'hydrogène limitées à un très faible niveau. On admet généralement que l'oxygène ne doit pas être présent dans des proportions supérieures à une limite de 3 à 5 parties par million (ppm) et l'hydrogène, dans des proportions supérieures à 2 ppm. En effet, le sodium liquide dont la température dans le réacteur varie généralement entre 180°C et 550°C, suivant les phases de fonctionnement du réacteur, est extrêmement avide de gaz tel que l'oxygène et l'hydrogène qui donnent naissance à des oxydes et hydrures au cours de réactions plus ou moins vives.

On utilise donc de l'argon de très grande pureté qui est stocké à l'état liquide dans un réservoir, pour constituer les couvertures gazeuses du circuit sodium du réacteur.

Après un certain temps de fonctionnement du réacteur, l'argon peut être légèrement pollué par des impuretés gazeuses telles que l'oxygène ou l'hydrogène et il peut être nécessaire de prélever cet argon et de le purifier avant de le renvoyer au-dessus des surfaces libres de sodium.

Pour effectuer cette purification de l'argon, on utilise généralement des appareils appelés barboteurs constitués par un réservoir renfermant un alliage sodium-potassium (NaK), à l'état liquide. Un tel alliage est extrêmement avide d'oxygène et d'hydrogène qui sont fixés principalement par le potassium.

Un barboteur de ce type comporte généralement une enveloppe de forme globalement cylindrique disposée avec son axe vertical et comportant un conduit ou enveloppe tubulaire interne disposé suivant l'axe de l'enveloppe du barboteur et permettant de délimiter à l'intérieur de celle-ci une zone centrale et une zone périphérique. L'alliage NaK est placé dans le fond de l'enveloppe du barboteur, le gaz neutre à épurer étant introduit sous pression, dans la partie supérieure de l'enveloppe du barboteur. Des chicanes de guidage permettent de faire circuler le gaz tout d'abord de haut en bas à l'intérieur de l'enveloppe tubulaire centrale puis de bas en haut dans l'espace situé à la périphérie de cette enveloppe tubulaire centrale. Le gaz neutre sous pression chasse l'alliage liquide NaK dans la partie périphérique du barboteur et traverse ainsi une colonne d'une certaine hauteur remplie de NaK dans la partie annulaire périphérique du barboteur.

A l'extrémité inférieure de l'espace annulaire périphérique est placée une grille qui fractionne l'écoulement gazeux ; le gaz neutre traverse ainsi la colonne annulaire de NaK sous forme de bulles, ce qui favorise le contact avec le NaK liquide et les réactions entre les impuretés gazeuses et ce métal liquide. Le gaz épuré est récupéré au-dessus de la colonne annulaire de NaK.

Un tel appareil le purification présente l'avantage d'être simple et de pouvoir fonctionner à la température ambiante, dans le cas où l'on choisit un alliage sodium-potassium ayant un très bas point de fusion. Cependent, l'alliage NaK est un produit très coûteux et très dangereux à manipuler. Dans la mesure où l'on ne connaît pas actuellement de procédé pour régénérer cet alliage après une utilisation d'une certaine durée comme élément d'épuration de gaz neutre, il est nécessaire de changer assez souvent la charge liquide du barboteur. Ceci entraîne des coûts d'exploitation importants et nécessite des manipulations dangereuses.

En cours d'utilisation, l'oxygène se fixe préférentiellement sur le potassium qui se transforme en oxyde ; le pourcentage de sodium dans l'alliage augmente donc et cet alliage est susceptible de se solidifier à la température ambiante, après un certain temps d'utilisation. Le barboteur qui doit être utilisé sous pression de gaz et dans lequel le gaz traverse une couche de liquide introduit d'autre part une perte de charge notable sur le circuit d'argon.

En raison de ces inconvénients, les exploitants de réacteurs nucléaires à neutrons rapides et plus généralement d'installations utilisant de grandes quantités de gaz neutre de grande pureté préfèrent bien souvent réapprovisionner leurs installations en gaz neutre plutôt que d'effectuer le traitement de purification et un recyclage du gaz pollué. Le gaz pollué est alors rejeté par une cheminée de l'installation, ce qui augmente le coût d'exploitation par consommation de gaz neutre.

Le but de l'invention est donc de proposer un procédé d'épuration d'un gaz neutre tel que l'ar gon, renfermant des impuretés constituées par des gaz réactifs tels que l'oxygène et l'hydrogène, qui ne présentent pas les inconvénients des procédés par barbotage connus de l'art antérieur.

Dans ce but :
- on fait circuler le gaz neutre en contact avec du sodium sous forme divisée, à une température voisine de 250°C,
- on refroidit le gaz neutre après sa mise en contact avec le sodium et on le fait passer à travers au moins un ensemble de filtration avant sa récupération,
- et on recueille le sodium renfermant des impuretés dissoutes ou en suspension, après sa mise en contact avec le gaz neutre et on le purifie par refroidissement et dépôt des impuretés solidifiées, avant son recyclage pour la purification de gaz neutre.

L'invention est également relative à un dispositif d'épuration d'un gaz neutre mettant en oeuvre le procédé suivant l'invention.

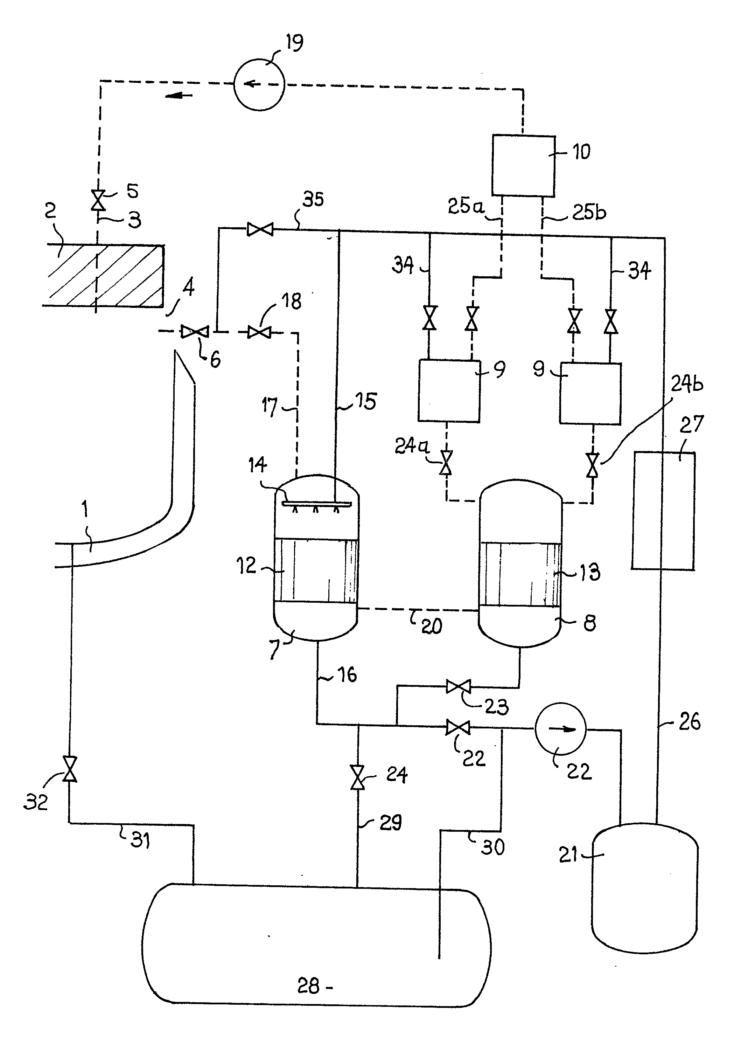

Afin de bien faire comprendre l'invention, on va maintenant décrire, à titre d'exemple non limitatif, en se référant à la figure jointe en annexe, un mode de réalisation d'un dispositif de purification mettant en oeuvre le procédé suivant l'invention et permettant la purification d'argon contenu dans un barillet de stockage d'un réacteur nucléaire à neutrons rapides.

La figure unique est un schéma général montrant la structure du dispositif de purification.

Sur la figure, on voit la cuve 1 d'un barillet de stockage d'éléments combustibles d'un réacteur nucléaire à neutrons rapides. Une telle cuve est disposée au voisinage de la cuve principale du réacteur nucléaire dans laquelle les assemblages combustibles constituant le coeur sont plongés dans du sodium liquide qui constitue le fluide caloporteur du réacteur récupérant la chaleur des assemblages combustibles.

Au moment du chargement ou du déchargement du coeur du réacteur, pour assurer le remplacement des assemblages usés, on utilise un barillet ou cuve de stockage pour recevoir les assemblages neufs destinés à être chargés dans le coeur ou au contraire les assemblages usagés avant leur transport vers une usine de retraitement.

La cuve 1 du barillet de stockage peut être remplie de sodium et assurer un stockage d'assez longue durée des assemblages usagés ou encore être remplie d'un gaz neutre tel que l'argon et servir uniquement au transfert des assemblages dont le stockage de longue durée assurant leur décroissance radio-active est alors effectué à l'intérieur de la cuve principale du réacteur.

Dans le cas où la cuve 1 est remplie d'argon, les différentes manipulations d'assemblages combustibles passant par cette cuve risquent d'entraîner une certaine pollution de l'argon par des gaz réactifs. La quantité d'argon contenue dans la cuve 1 étant très grande, il peut être avantageux sinon nécessaire d'effectuer une certaine purification de ce gaz pour éliminer les gaz réactifs. L'installation représentée sur la figure unique permet d'effectuer cette purification, de façon très efficace et avec un coût d'exploitation relativement faible.

La cuve 1 du barillet est fermée par une dalle de forte épaisseur 2 assurant la protection biologique des opérateurs travaillant au-dessus de cette cuve, lorsqu'elle contient des assemblages irradiés.

Dans le mode de réalisation représenté, l'argon à purifier est prélevé dans la cuve 1, par une conduite 4 débouchant latéralement dans cette cuve à sa partie supérieure. L'argon purifié est renvoyé dans la cuve 1 au travers de la dalle 2, par une conduite 3, des vannes respectives 5 et 6 sur les conduites 3 et 4 permettent de mettre en communication ou d'isoler le volume intérieur de la cuve 1.

De manière générale, le dispositif suivant l'invention représenté sur la figure comporte un circuit de gaz neutre dont les conduites 3 et 4 constituent les parties d'extrémité en communication avec la cuve 1 et un circuit de sodium utilisé pour la purification du gaz neutre. Ces deux circuits sont en communication, principalement par l'intermédiaire de composants tels que des colonnes d'échange 7 et 8 et des filtres 9 et 10.

Les colonnes 7 et 8 comportent une enveloppe de forme générale cylindrique formée par des fonds bombés et remplie sur une partie de sa hauteur par des éléments assurant un contact intime et un échange de type thermique ou chimique à l'intérieur de la colonne.

Dans le mode de réalisation préférentiel représenté sur la figure, les colonnes 7 et 8 sont remplies sur une partie de leur hauteur par une couche respective 12 ou 13 d'anneaux PALL bien connus de la technique.

Bien que la forme générale et le garnissage des colonnes 7 et 8 soient sensiblement identiques, les fonctions de ces deux colonnes dans le procédé et le dispositif suivant l'invention sont tout-à-fait différentes.

La colonne 7 comporte en partie supérieure une rampe 14 reliée par l'intermédiaire d'une conduite 15 au circuit de sodium. Du sodium à une température sensiblement égale à 250°C est envoyé dans la rampe 14 et réparti sur la surface supérieure de la couche d'anneaux PALL 12 qui est elle-même préchauffée à 250°C et maintenue à cette température par des moyens de chauffage non représentés.

Le sodium liquide ruisselle entre les anneaux et s'écoule dans le fond bombé de la colonne 7 où il est récupéré par une conduit 16.

L'argon à épurer prélevé par la canalisation 4 pénètre dans la partie supérieure de la colonne 7 par l'intermédiaire d'une conduite 17 sur laquelle est interposée une vanne 18.

Le gaz neutre est mis en circulation dans l'ensemble du circuit de gaz neutre par l'intermédiaire d'un compresseur 19 disposé sur la canalisation de retour 3 qui assure l'aspiration de ce gaz en aval et sa réintroduction dans la cuve 1. Le gaz est donc aspiré à travers l'ensemble du circuit pour traverser les différents composants 7, 8, 9 et 10 qui assurent son épuration.

Le gaz neutre traverse la colonne 7 entre la conduite d'arrivée 17 et une conduite 20 joignant la partie inférieure de la colonne 7 à la partie inférieure de la colonne 8, en-dessous des couches d'anneaux 12 et 13.

Lors de sa traversée du lit d'anneaux 12, le gaz neutre vient en contact avec le sodium sous forme divisée qui ruisselle entre les anneaux. Il se produit donc un contact intime entre le gaz neutre et le sodium à 250° qui, à cette température, est très avide d'oxygène et des autres gaz réactifs tels que l'hydro gène et la vapeur d'eau qui sont susceptibles d'être contenus dans le gaz neutre provenant de la cuve 1.

Les impuretés gazeuses contenues dans ce gaz sont donc retenues par le sodium, généralement sous forme de composés tels que des oxydes ou des hydrures.

Le sodium qui est aspiré par une pompe électromagnétique 22 sort de la colonne d'échange 7 par la canalisation 16 puis est envoyé à un piège froid 21, la vanne 22' étant ouverte et les vannes 23 et 24 du circuit de sodium étant fermées.

Le gaz neutre débarrassé de la plus grande partie de ses impuretés passe de la partie inférieure de la colonne 7 à la partie inférieure de la colonne 8 par la canalisation 20 puis traverse le lit d'anneaux d'échange 13 qui est maintenu à une basse température, ce qui permet de refroidir le gaz neutre par contact et de le débarrasser des aérosols de sodium dont il a pu se charger lors de sa traversée de la colonne 7. Le sodium retenu par le lit d'anneaux 13 se rassemble dans le fond de la colonne 8 à partir duquel il peut être évacué par une canalisation correspondante sur laquelle se trouve la vanne 23.

A la sortie de la colonne d'échange 8, le circuit de gaz neutre se dédouble en deux branches 24a et 24b permettant d'emmener le gaz neutre vers l'un des filtres 9 à mailles fines qui permettent de retenir les traces de sodium que peut encore renfermer le gaz neutre. Les filtres 9 sont reliés à un filtre unique 10, chacun par une branche 25a, 25b du circuit de gaz neutre sur laquelle est placée une vanne d'isolement.

A sa sortie du filtre 10, le gaz neutre débarrassé de ses dernières traces de sodium et refroidi est aspiré par le compresseur 19 qui assure sa réinjection dans la cuve 1, par l'intermédiaire de la conduite 3.

Le sodium chargé d'oxyde après son contact avec le gaz neutre dans la colonne 7 est refroidi à l'intérieur du piège froid 21 et traverse des éléments de filtration maintenus à basse température sur lesquels se déposent les oxydes contenus dans le sodium.

Le sodium épuré sort du piège froid par l'intermédiaire d'une conduite 26 sur laquelle est disposé un élément de réchauffage 27 en sortie duquel le sodium est à une température voisine de 250°. Le sodium peut ensuite être réinjecté dans la rampe 14 de la colonne 7, par l'intermédiaire de la conduite 15 pour assurer l'épuration du gaz neutre. Le sodium est ainsi recyclé en permanence dans l'installation.

L'installation représentée sur la figure comporte également un réservoir de sodium 28 placé en dérivation sur le circuit de sodium par l'intermédiaire d'une conduite placée en dérivation sur la conduite 16 et sur laquelle est placée la vanne 24 et d'une conduite 30 reliée à l'aspiration de la pompe 22.

De plus, le réservoir 28 est relié par une conduite 31 sur laquelle est placée une vanne d'arrêt 32 au fond de la cuve 1.

Le circuit de sodium est de plus relié à chacun des filtres 9 par l'intermédiaire d'une conduite 34 correspondante sur laquelle est disposée une vanne de sectionnement. En outre, le circuit de sodium est relié à la conduite de prélèvement de gaz neutre 4 par l'intermédiaire d'une conduite 35 reliée à la conduite 15 et sur laquelle se trouve une vanne de sectionnement.

Ces liaisons permettent de faire circuler du sodium dans l'ensemble de l'installation, par ouverture des vannes correspondantes. On peut réaliser un lessivage complet de l'installation par du sodium, ce qui permet d'éliminer toutes les impuretés qui auraient pu se déposer, par exemple sur les organes de filtration et dans les lits des colonnes d'échange 7 et 8 et ainsi d'éviter tout risque de colmatage ou de bouchage du circuit.

Le remplissage du circuit de sodium peut être effectué à partir du réservoir 28, grâce à la pompe 22 et à la conduite 30.

Par la suite, pendant les opérations de purification du gaz neutre et de lessivage périodique de l'installation en sodium, le sodium contenant des impuretés est purifié dans le piège froid 21.

La structure du circuit permet également de réaliser la vidange du sodium qui peut être contenu dans les colonnes 7 ou 8 ou dans la cuve 1, vers le réservoir 28.

Après un certain temps de fonctionnement de l'installation, les éléments de filtration du piège froid 21 risquent d'être plus ou moins colmatés par les oxydes qui viennent s'y déposer ; dans ce cas, il est facile de régénérer le piège froid par un procédé classique.

Le procédé et le dispositif suivant l'invention présentent l'avantage de permettre d'effectuer une épuration d'un gaz neutre en utilisant un métal liquide qui peut être facilement régénéré et recyclé de manière continue pendant l'épuration du gaz. Le fonctionnement de l'installation peut se poursuivre de manière continue sans risque de colmatage ou de bouchage par solidification du sodium. D'autre part, le dispositif peut être facilement débarrassé de dépôts éventuels d'impuretés et décolmaté, par une circulation de sodium de lessivage.

L'invention ne se limite pas au mode de réalisation qui a été décrit.

Les colonnes d'échange peuvent avoir des structures différentes de celles qui ont été décrites et son garnissage réalisé d'une autre manière.

Un garnissage constitué par un lit d'anneaux PALL a l'avantage de présenter un rapport surface/volume important, ce rapport étant de 120 m² par mètre cube de garnissage.

On peut cependant utiliser d'autres types de garnissage connus dans la technique des réacteurs chimiques ou des échangeurs de chaleur ou d'autres dispositions telles que des plateaux assurant une division du courant de sodium et une mise en contact efficace de ce sodium avec le gaz neutre.

On peut également éviter toute utilisation d'un garnissage en réalisant une division du sodium, par exemple en l'injectant dans la colonne d'échange et de réaction sous forme pulvérisée.

De même, dans la colonne où l'on réalise le refroidissement du gaz neutre, les moyens utilisés pour ce refroidissement par contact pourront avoir une forme quelconque.

Les filtres et le piège froid qui sont des éléments couramment utilisés dans la technique des métaux liquides et en particulier dans la technique de traitement du sodium pourront avoir toute forme et par exemple être constitués par des toiles métalliques ou autres éléments en fils métalliques par exemple en fils d'acier inoxydable.

Le procédé et le dispositif suivant l'invention peuvent être utilisés non seulement pour l'épuration du gaz neutre de remplissage de la cuve du barillet de stockage d'un réacteur nucléaire mais également pour l'épuration de l'argon de couverture de la cuve principale ou d'autres parties du circuit de sodium du réacteur nucléaire.

Le procédé et le dispositif suivant l'invention peuvent s'appliquer à des installations différentes d'installations nucléaires, dans lesquelles on utilise un gaz neutre qui doit être soigneusement épuré pour éviter la présence dans ce gaz, d'hydrogène, d'oxygène ou de vapeur d'eau.

**Revendications**

1.- Procédé d'épuration d'un gaz neutre tel que l'argon renfermant des impuretés constituées par des gaz réactifs tels que l'oxygène et l'hydrogène, caractérisé par le fait :
- qu'on fait circuler le gaz neutre en contact avec du sodium sous forme divisée, à une température voisine de 250°C,
- qu'on refroidit le gaz neutre après sa mise en contact avec le sodium et qu'on le fait passer à travers au moins un ensemble de filtration avant sa récupération,
- et qu'on recueille le sodium renfermant des impuretés dissoutes ou en suspension, après sa mise en contact avec le gaz neutre et qu'on le purifie par refroidissement et dépôt des impuretés solidifiées avant son recyclage pour l'épuration de gaz neutre.

2.- Procédé suivant la revendication 1, caractérisé par le fait que le sodium sous forme divisée est en écoulement dans un lit (12) d'éléments assurant son fractionnement, le gaz neutre circulant à travers le lit (12) dans lequel ruisselle le sodium.

3.- Procédé suivant la revendication 1, caractérisé par le fait que le sodium est injecté sous forme pulvérisée dans une colonne (7) dans laquelle circule le gaz neutre.

4.- Dispositif d'épuration d'un gaz neutre renfermant des impuretés constituées par des gaz réactifs, caractérisé par le fait qu'il comporte un circuit de prélèvement, de circulation et de recyclage de gaz neutre sur lequel sont disposés, successivement dans le sens de la circulation du gaz neutre, une premère colonne d'échange (7), une seconde colonne d'échange (8) et au moins un filtre (9, 10), et un cir cuit de sodium assurant l'alimentation en sodium de la première colonne d'échange (7) et comportant en sortie de la première colonne d'échange (7), un piège froid (21) et une conduite de recyclage (26) en sortie du piège froid pour renvoyer le sodium épuré à l'entrée de la colonne (7), la seconde colonne d'échange (8) renfermant des éléments d'échange thermique (13) pour le refroidissement du gaz neutre.

5.- Dispositif suivant la revendication 4, caractérisé par le fait que les colonnes d'échange (7, 8) sont constituées sous la forme d'enveloppes renfermant un garnissage constitué par des éléments juxtaposés ménageant entre eux des passages de fluide.

6.- Dispositif suivant la revendication 5, caractérisé par le fait que les éléments de garnissage des colonnes (7, 8) sont constitués par des anneaux PALL.

7.- Dispositif suivant l'une quelconque des revendications 4 à 6, caractérisé par le fait qu'un réservoir de sodium (28) est disposé en dérivation sur le circuit de sodium entre la première colonne d'échange (7) et le piège froid (21).

8.- Dispositif suivant l'une quelconque des revendications 4 à 7, caractérisé par le fait que le circuit de sodium est relié aux colonnes d'échange (7, 8) et au filtre (9, 10) par des conduits de circulation de sodium pour assurer le lessivage des colonnes d'échange (7, 8) et du filtre (9, 10) et l'élimination d'impuretés déposées dans ces colonnes et filtres.

9.- Utilisation du procédé suivant la revendication 1, pour l'épuration d'argon utilisé dans une installation de réacteur nucléaire à neutrons rapides.

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS vol. 103, no. 22, décembre 1985, page 124, résumé no. 180342q, Columbus, Ohio, US; M. FRESL et al.:"Apparatus and method for argon purification"; & CS - A - 225 755 (M. FRESL et al.) 01.07.1985 --- | 1,4 | C 01 B  23/00 G 21 F   9/02 |
| A | PATENT ABSTRACTS OF JAPAN vol. 11, no. 300 (C-449)(2747), 29 septembre 1987; & JP - A - 62 95116 (MITSUBISHI HEAVY IND. LTD.) 01.05.1987 --- | 1,4 | |
| A | PATENT ABSTRACTS OF JAPAN vol. 1, no. 45 (C-76), page 1699, 4 mai 1977; & JP - A - 51 151694 (DORYOKURO-KAKUNENRYO KAIHATSU JIGYODAN) 27.12.1976 ----- | | |

DOMAINES TECHNIQUES RECHERCHES (Int. Cl.4)

C 01 B  23/00
G 21 F   9/02

Le présent rapport a été établi pour toutes les revendications

| Lieu de la recherche | Date d'achèvement de la recherche | Examinateur |
|---|---|---|
| BERLIN | 18-04-1989 | BERTRAM H E H |